# EUROPÄISCHE PATENTSCHRIFT

(11) **EP 4 295 544 B1**
(45) Veröffentlichungstag und Bekanntmachung des Hinweises auf die Patenterteilung: **14.10.2026**
(21) Anmeldenummer: 22712246.2
(22) Anmeldetag: 14.02.2022
(51) Int. Cl.: H04L 12/413

(54) **SINGLE PAIR ETHERNET SCHALTEINRICHTUNG**
SINGLE-PAIR ETHERNET SWITCHING APPARATUS
APPAREIL DE COMMUTATION ETHERNET À PAIRE UNIQUE

(30) Priorität: 22.02.2021 DE 102021104130
(43) Veröffentlichungstag der Anmeldung: 27.12.2023
(73) Patentinhaber: HARTING Electronics GmbH, 32339 Espelkamp (DE)
(72) Erfinder: FRIESEN, Markus, 32339 Espelkamp (DE); LOSKE, Felix, 32339 Espelkamp (DE)
(74) Vertreter: Ridderbusch, Oliver
(86) Internationale Anmeldenummer: PCT/DE2022/100123
(87) Internationale Veröffentlichungsnummer: WO 2022/174865

(56) Entgegenhaltungen:
- EP-A1- 3 503 417
- US-A1- 2020 106 639
- US-A1- 2020 326 771

## Beschreibung

Die Erfindung betrifft eine Netzwerk Schalteinrichtung und insbesondere eine für viele Anwendungen geeignete einpaarige (Single Pair) Ethernet Schalteinrichtung und insbesondere einen einpaarigen (Single Pair) Ethernet Switch.

Derartige Schalteinrichtungen und Switches werden zur Verbindung von Geräten in einem Netzwerk benötigt, um eine Daten-Kommunikation zwischen verschiedenen Netzwerkgeräten zu ermöglichen.

IEEE 802.3bw ist ein IEEE-Standard zur Ethernet-Datenübertragung über einpaarige Kupferkabel mit verdrillten Adernpaaren (Twisted-Pair) mit 100 Megabit pro Sekunde. Der Standard spezifiziert die 100Base-T1-Ethernet-Schnittstelle, die eine Datenübertragung mit einer Geschwindigkeit von 100 Megabit pro Sekunde bis 1 GBit pro Sekunde über einpaarige Kupferkabel mit verdrillten Adernpaaren (Twisted-Pair) ermöglicht, wobei zur Datenübertragung nur eine Kupferdoppelader, daher einpaariges (Single Pair) Ethernet (SPE/T1-Ethernet), benötigt wird.

Gleichzeitig wird mit SPE/T1-Ethernet die Spannungsversorgung von Endgeräten über Datenleitung (via Power over Data Line) (PoDL) ermöglicht. Einpaarige (Single Pair) Ethernet Übertragung ist mit Übertragungsreichweiten bis 1000 Meter insbesondere für den Einsatz in der Prozessautomatisierung und in der Industrieautomatisierung geeignet. Einpaarige Verkabelungen sind darüber hinaus schnell, platzsparend, kostengünstig und einfach zu implementieren.

Außerdem hat sich mit dem Wachstum des Internet der Dinge (IoT) sowie von Industrie- und Automobilanwendungen insbesondere auch angesichts des wachsenden Bedarfs an kostengünstiger Stromversorgung, Datenkonnektivität und Sicherheit für die große Anzahl von Endgeräten, die in Zukunft bereitgestellt werden, SPE/T1-Ethernet als vielversprechende Technologie herausgestellt.

Das SPE/T1-Ethernet sieht zur Abdeckung des vorstehenden Einsatzbereiches die nicht kompatiblen Standards T1, T1L und T1S vor. T1 ist besonders für den Einsatz im Automotive Ethernet geeignet und gestattet bei einer maximalen Reichweite von 15 m (abgeschirmt bis 40 m) eine Datenübertragung von 100 MBit/s bis 1000 MBit/s. T1L ist mit einer Datenübertragung von 10 MBit/s und einer Reichweite von 1000 m (bis 1700 m möglich) für den Fernfeld (Long-Range) Bereich vorgesehen, und T1S gestattet im Nahfeld (Short-Range) Bereich bei einer Reichweite von 15 m und einer Datenübertragungsrate von 10 MBit/s einen Mehrpunktverbindungsbetrieb (Multi-Drop) von bis zu acht Teilnehmern.

### Stand der Technik

Aus der US 2020/0153174 A1 ist ein Anschluss-System mit einem Steckverbinder und einer Verbinderbuchse bekannt, das zur Bereitstellung einer einpaarigen (Single Pair) Ethernet Verbindung einer Vielzahl unterschiedlicher Geräte geeignet sein soll. Hierfür weist der Steckverbinder eine gemeinsame Schnittstelle mit gleichen Außenabmessungen und gleichem Kontakt- / Stiftabstand für Kabel unterschiedlicher Stärke auf, die einpaariges (Single Pair) Ethernet unterstützen.

Die vorstehenden T1, T1L und T1S Standards sind jedoch untereinander elektrisch nicht kompatibel, wonach der Einsatz und Betrieb ihrer Geräte und Einrichtungen (Devices) und deren Vernetzung entsprechend auf einen der genannten Standards eingeschränkt ist, und wonach das aus der US 2020/0153174 A1 bekannte Anschluss-System nachteilhaft ebenfalls auf die Bereitstellung einer Verbindung von entsprechend kompatiblen Geräten und Einrichtungen (Devices) eingeschränkt ist.

Die T1, T1L und T1S Standards unterscheiden sich dabei in ihrer Bitübertragungsschicht (Physical Layer) und Sicherungsschicht (Data Link Layer) des OSI-Modells, wonach jeder Standard eine eigene elektrische Schnittstelle (Interface) zur Datenübertragung benötigt. Anders als in der Bitübertragungsschicht (Physical Layer) und Sicherungsschicht (Data Link Layer) sind die T1, T1L und T1S Standards in den weiteren Schichten (Layern) des OSI-Modells, wie beispielsweise der Vermittlungsschicht (Network IP Layer) oder der Anwendungsschicht (Application Layer) untereinander kompatibel.

Das Deutsche Patent- und Markenamt hat in der Prioritätsanmeldung zur vorliegenden Anmeldung den folgenden Stand der Technik recherchiert: DE 10 2019 126 341 A1, DE 10 2021 105 867 A1, DE 10 2015 211 107 A1, US 2019/0104085 A1, US 10,708,630 B1, Marvell^{®} Brightlane^{™} 88Q2110/88Q2112 100/1000BASE-T1 PHY Product Brief und Marvell^{®} Brightlane^{™} 88Q1010 100BASE-T1 PHY Product Brief.

Aus der US 2020/0326771 A1 ist ein Ethernet-Kommunikationsgerät mit einer Datenschnittstelle und Schaltkreisen bekannt. Die Datenschnittstelle ist für die Kommunikation mit einem Nachbargerät konfiguriert. Die Schaltkreise sind für den Austausch von Ethernet-Datenframes mit dem Nachbargerät über die Datenschnittstelle konfiguriert, wobei aufeinanderfolgende Datenframes zeitlich durch ein Inter-Packet Gap (IPG) mit mindestens einer vordefinierten minimalen Dauer getrennt sind. Für den weiteren Austausch mit dem Nachbargerät über die Datenschnittstelle während des IPG zwischen Ethernet-Frames, die auf der Datenschnittstelle ausgetauscht werden, weist ein Wake-up-/Sleep-Befehl ein Umschalten zwischen einem aktiven Modus und einem Sleep-Modus an, wobei der Wake-up-/Sleep-Befehl über die Datenschnittstelle ausgetauscht wird.

Aus der US 2020/0106639 A1 ist ein Kommunikationsverfahren zum Betrieb einer Ethernet-MAC-Steuerungseinheit mit einer in einem IEEE 802.3-Standard spezifizierten Rate bekannt. Um Daten zu oder von der Ethernet-MAC-Einheit mit einer effektiven Datenkommunikationsrate auf ein physikalisches Medium zu übertragen wird die Datenkommunikationsrate auf eine effektive Datenkommunikationsrate angepasst, die von der in dem IEEE 802.3-Standard angegebenen Rate abweicht.

### Aufgabenstellung

Die Aufgabe der Erfindung besteht darin, eine Schalteinrichtung zur Bereitstellung einer einpaarigen (Single Pair) Ethernet (SPE/T1-Ethernet) Verbindung bereitzustellen, die für eine Vielzahl von Geräten, Einrichtungen (Devices) und Anwendungen geeignet sein soll. Hierbei ist insbesondere Aufgabe der Erfindung einen SPE/T1-Ethernet Switch bereitzustellen.

Die Aufgabe wird durch die Merkmale des unabhängigen Anspruchs 1 gelöst.

Vorteilhafte Ausgestaltungen der Erfindung sind in den Unteransprüchen und/oder der nachfolgenden Beschreibung angegeben.

Die Erfindung betrifft insbesondere eine Schalteinrichtung zur Bereitstellung einer einpaarigen (Single Pair) Ethernet (SPE/T1-Ethernet) Verbindung mit einer ersten und zweiten Schnittstelle. Die erste Schnittstelle ist geeigneter Weise eine vielpolige und insbesondere eine MII- oder RMII Schnittstelle, und die zweite Schnittstelle ist vorteilhaft eine zweipolige SPE/T1-Ethernet spezifische Schnittstelle. Die Schalteinrichtung ist hierbei derart eingerichtet, dass eine Datenübertragung von der ersten zu der zweiten Schnittstelle und von der zweiten zur ersten Schnittstelle geschaltet werden kann.

Für einen Betrieb der zweiten Schnittstelle weist die Schalteinrichtung geeigneter Weise eine erste für einen 100Base-T1 Betrieb geeignete Elektronik und/oder eine zweite für einen 10Base-T1L Betrieb geeignete Elektronik und/oder eine dritte für einen 10Base-T1S Betrieb geeignete Elektronik auf. Mittels der vorstehenden ersten T1 Elektronik und/oder der zweiten T1L Elektronik und/oder der dritten T1S Elektronik kann ein ausgewählter SPE/T1-spezifischer Betrieb der zweiten Schnittstelle ausgewählt und geschaltet werden.

Die erste T1 Elektronik kann geeigneter Weise mittels einem 100Base T1 Ethernet PHY-IC mit weiteren passiven Bauelementen bereitgestellt werden.

Die zweite T1L Elektronik kann geeigneter Weise mittels einem 10Base T1L Ethernet PHY-IC mit weiteren passiven Bauelementen bereitgestellt werden.

Die dritte T1S Elektronik kann geeigneter Weise mittels einem 10Base T1S Ethernet PHY-IC mit weiteren passiven Bauelementen bereitgestellt werden.

Die vorstehende erste T1 Elektronik und die zweite T1L Elektronik und die dritte T1S Elektronik ist geeigneter Weise derart ausgebildet und eingerichtet, dass jeweils eine Datenübertragung von der ersten Schnittstelle zu der zweiten Schnittstelle und von der zweiten Schnittstelle zu der ersten Schnittstelle geschaltet werden kann.

Mittels der vorstehenden Schalteinrichtung können die nicht kompatiblen SPE/T1-Ethernet Standards T1, T1L und T1S vorteilhaft zwischen der ersten und zweiten Schnittstelle geschaltet werden, wobei für eine Schaltung eines geeigneten kompatiblen Betriebs insbesondere die zweite Schnittstelle der Schalteinrichtung geeignet ist.

Die Schalteinrichtung kann hierfür geeigneter Weise wenigstens eine Leiterplatte mit der ersten T1 oder zweiten T1L oder dritten T1S Elektronik aufweisen. Die mit der ersten T1 oder zweiten T1L oder dritten T1S Elektronik versehene Leiterplatte kann hierbei derart ausgebildet sein, dass die Leiterplatte derart auf einen Steckplatz einer Leiterplatte einer ersten Einrichtung (Device) steckbar ist, dass die erste Schnittstelle der Schalteinrichtung mit einer Elektronik der Leiterplatte der ersten Einrichtung (Devices) verbunden ist.

Die mit der ersten T1 oder zweiten T1L oder dritten T1S Elektronik versehene Leiterplatte kann hierbei insbesondere vorteilhaft derart ausgebildet sein, dass die Leiterplatte derart auf einen Steckplatz der Leiterplatte der ersten Einrichtung (Device) steckbar ist, dass die zweite Schnittstelle mit einem auf der Leiterplatte der ersten Einrichtung (Device) vorgesehenen Buchsenteil eines Steckverbinders verbunden ist. Das Buchsenteil ist dabei geeigneter Weise auf der Leiterplatte der ersten Einrichtung (Device) angeordnet und für eine Steckverbindung mit einem Steckteil des Steckverbinders vorgesehen, das an ein zweiadriges einpaariges (Single Pair) Ethernet Kabel angeschlossen ist. Hierfür weist das Buchsenteil eine geeignete zweite Schnittstelle auf.

Mittels einer Auswahl einer geeigneten kompatiblen Leiterplatte, die eine erste T1 Elektronik, eine zweite T1L Elektronik oder eine dritte T1S Elektronik aufweisen kann, kann auf einfache Weise ein vorbestimmter kompatibler T1 Betrieb, T1L Betrieb oder T1S Betrieb der zweiten Schnittstelle für das Buchsenteil bereitgestellt werden. Auf diese Weise kann ein mit einer über das Steckteil an das Buchsenteil der ersten Einrichtung (Device) angeschlossenen zweiten Einrichtung (Device) kompatibler Betrieb der Schalteinrichtung und insbesondere der zweiten Schnittstelle des Buchsenteils geschaltet werden.

Die vorstehende Schalteinrichtung kann an Stelle der mit der ersten T1 oder zweiten T1L oder dritten T1S Elektronik versehenen Leiterplatte wenigstens einen Steckverbinder mit der ersten T1 oder zweiten T1L oder dritten T1S Elektronik und mit der ersten und zweiten Schnittstelle aufweisen.

Bei dem Steckverbinder kann es sich geeigneter Weise um ein Buchsenteil handeln, das mit seiner ersten Schnittstelle mit der Leiterplatte der ersten Einrichtung (Device) verbunden ist. Das Buchsenteil kann dabei vorteilhaft mit seiner zweiten Schnittstelle für eine Steckverbindung mit einem Steckteil vorgesehen sein, das an ein zweiadriges einpaariges (Single Pair) Ethernet Kabel angeschlossen ist.

Auf diese Weise kann wie bei der vorstehenden Ausführung der Schalteinrichtung ein mit einer über das Steckteil an das Buchsenteil der ersten Einrichtung (Device) angeschlossenen zweiten Einrichtung (Device) kompatibler Betrieb der Schalteinrichtung und insbesondere der zweiten Schnittstelle geschaltet werden. Mittels einer Auswahl eines geeigneten kompatiblen Buchsenteils, das eine mit dem Steckteil und der zweiten Einrichtung (Device) kompatible erste T1 Elektronik oder zweite T1L Elektronik oder dritte T1S Elektronik aufweisen kann, kann auf einfache Weise ein vorbestimmter kompatibler T1 Betrieb, T1L Betrieb oder T1S Betrieb der zweiten Schnittstelle des Buchsenteils mit dem Steckteil, dem Kabel und einem T1 Betrieb, T1L Betrieb oder T1S Betrieb der zweiten Einrichtung (Device) bereitgestellt werden.

Der vorstehende Steckverbinder kann außerdem an Stelle des Buchsenteils ein Steckteil sein, das eine mit einerzweiten Einrichtung (Device) kompatible erste T1 Elektronik oder zweite T1L Elektronik oder dritte T1S Elektronik aufweisen kann. Das Steckteil kann dabei geeigneter Weise mit seiner ersten Schnittstelle für eine Steckverbindung mit einem Buchsenteil der Leiterplatte der ersten Einrichtung (Device) vorgesehen sein, und mit seiner zweiten Schnittstelle an ein zweiadriges einpaariges (Single Pair) Ethernet Kabel angeschlossen sein.

Nach einer weiteren besonders vorteilhaften Ausführung der Erfindung kann die Schalteinrichtung die erste T1 Elektronik und die zweite T1L Elektronik und dritte T1S Elektronik und außerdem eine erste 11 und zweite 12 Schalteinheit aufweisen.

Die erste und zweite Schalteinheit kann hierbei vorteilhaft derart ausgebildet und eingerichtet sein, dass jeweils eine Verbindung der ersten T1 Elektronik oder zweiten T1L Elektronik oder dritten T1S Elektronik mit einer ersten und zweiten Schnittstelle einer Elektronik der Leiterplatte der ersten Einrichtung (Device) geschaltet werden kann. Geeigneter Weise kann bei dieser Ausführung der Schalteinrichtung auf der Leiterplatte der ersten Einrichtung (Device) eine Steuereinheit zur Steuerung der ersten und zweiten Schalteinheit vorgesehen sein, die jeweils über eine erste und zweite Steuerleitung mit der ersten und zweiten Schalteinheit verbunden ist.

Bei der ersten und zweiten Schalteinheit kann es sich geeigneter Weise jeweils um eine analoge Schalteinheit handeln, und bei der Steuereinheit kann es sich geeigneter Weise um einen Kontroller (Controller) handeln.

Mittels der vorstehenden von dem Kontroller (Controller) gesteuerten Schalteinrichtung kann vorteilhaft ein mit der zweiten Schalteinheit verbundenes und auf einer Leiterplatte der ersten Einrichtung (Device) angeordnetes Buchsenteil, das eine zweite Schnittstelle für eine Steckverbindung mit einem an ein zweiadriges einpaariges (Single Pair) Ethernet Kabel angeschlossenes Steckteil aufweist, besonders zuverlässig, effizient und flexibel als schaltbare 100Base T1, 10Base T1L oder 10Base T1S Schnittstelle betrieben werden.

Die erste und zweite Schalteinheit und die erste T1, zweite T1L und dritte T1S Elektronik können dabei geeigneter Weise zusammen mit dem Kontroller (Controller) und dem Buchsenteil auf der Leiterplatte der ersten Einrichtung (Device) angeordnet sein, wobei die Leiterplatte vorteilhaft mit entsprechenden geeigneten Bauelementen zur Bereitstellung der ersten und zweiten Schalteinheit und der ersten T1, zweiten T1L und dritten T1S Elektronik bestückt sein kann.

Die erste T1, zweite T1L und dritte T1S Elektronik der vorstehenden Schalteinrichtung kann außerdem jeweils auf einer ersten, zweiten und dritten Leiterplatte vorgesehen sein, die geeigneter Weise in einem Leiterplatten-Stapel (Stack) angeordnet sein können, der in einen geeigneten Steckplatz der Leiterplatte der ersten Einrichtung (Device) gesteckt werden kann.

Die erste und zweite Schalteinheit der Schalteinrichtung können dabei jeweils auf der Leiterplatte der ersten Einrichtung (Device) angeordnet sein, oder jeweils mittels einem ersten und zweiten Schaltelement bereitgestellt sein, die zusammen mit der ersten T1, zweiten T1L und dritten T1S Elektronik jeweils auf der ersten, zweiten und dritten Leiterplatte angeordnet sind.

Besonders vorteilhaft kompakt und funktional können die erste und zweite Schalteinheit und die erste T1, zweite T1L und dritte T1S Elektronik in einem Chip integriert sein, wobei die Leiterplatte der ersten Einrichtung (Device) auf geeignete Weise mit dem Chip bestückt sein kann.

Insbesondere eine vorstehende eine erste T1, zweite T1L und dritte T1S Elektronik und eine erste und zweite Schalteinheit aufweisende Schalteinrichtung kann vorteilhaft hard- und softwaregestützt automatisch geschaltet werden, und/oder eine hard- und/oder softwaregestützte Benutzer Schnittstelle (User Interface) zur manuellen Schaltung der Schalteinrichtung aufweisen.

Die Schalteinrichtung einer ersten Einrichtung (Device) kann vorteilhaft hard- und softwaregestützt automatisch geschaltet werden, und eine Steckverbindung eines mit einer zweiten Einrichtung (Device) verbundenen Steckteils mit dem Buchsenteil der Schalteinrichtung erkannt und mittels Schaltung der ersten und zweiten Schalteinheit auf Betrieb der ersten T1 und zweiten T1L und dritten T1S Elektronik mittels Erkennung von Datenverbindungen (Data Links) geprüft werden kann. Bei Detektion von entsprechenden Datenverbindungen (Data Links) kann der Betrieb der Elektronik T1, T1L oder T1S, bei der die Datenverbindungen (Data Links) detektiert werden, und als für den weiteren kompatiblen Betrieb der Schalteinrichtung geeignet geschaltet werden.

Die Schalteinrichtung kann darüber hinaus einen geeigneten manuellen Schalter oder Taster und/oder eine hard- und softwaregestützte Benutzer Schnittstelle (User Interface) zur manuellen Schaltung der Schalteinrichtung aufweisen kann, die insbesondere eine Webschnittstelle (Web-Interface) sein kann.

Eine vorstehend beschriebene Schalteinrichtung nach einer Ausführung der Erfindung kann vorteilhaft mittels der Schalteinrichtung und insbesondere mittels der zweiten Schnittstelle zur Bereitstellung von Energieversorgung über Datenleitung (Power over Data Line, PoDL) geeignet ausgebildet und eingerichtet sein.

Bei der ersten Einrichtung (Device), auf deren Leiterplatte eine vorstehend beschriebene Schalteinrichtung bereitgestellt ist, kann es sich um eine beliebige Einrichtung (Device) und insbesondere vorteilhaft um einen nachfolgend beschriebenen SPE/T1-Ethernet Switch oder eine nachfolgend beschriebene SPE/T1- Entwicklungsplatine (Development Board) handeln.

Bei der mit einer zweiten Schnittstelle der Schalteinrichtung verbindbaren zweiten Einrichtung (Device) kann es sich wie bei der ersten Einrichtung (Device) um ein beliebiges wenigstens eine erste T1 oder zweite T1L oder dritte T1S Elektronik und eine erste und zweite Schnittstelle aufweisendes Gerät oder Einrichtung (Device) handeln, das für eine Datenkommunikation mit wenigstens einer weiteren zweiten Einrichtung (Device) über einen SPE/T1-Ethernet Switch geeignet ist.

Die Erfindung betrifft demnach außerdem einen SPE/T1-Ethernet Switch, der nach einer Ausführung der Erfindung geeigneter Weise eine erste, zweite und dritte vorstehend beschriebene Schalteinrichtung mit jeweils einer ersten T1, zweiten T1L und dritten T1S Elektronik aufweisen kann, die vorteilhaft benachbart zueinander in einem Tripelangeordnet sein können. Die erste T1, zweite T1L und dritte T1S Elektronik des Tripelskönnen jeweils mit einem ersten, zweiten und dritten Buchsenteil verbunden sein, die insbesondere eine zweite Schnittstelle aufweisen können.

Auf diese Weise können mittels dem ersten, zweiten und dritten Buchsenteil ein erster, zweiter und dritter Anschluss (Port) des Ethernet Switches bereitgestellt sein, die jeweils zur Bereitstellung einer Datenverbindung von zweiten Einrichtungen (Devices) geeignet sind. Die zweiten Einrichtungen (Devices) können zur Datenübertragung über den Switch mittels einem ebenfalls eine zweite Schnittstelle aufweisenden Steckteil jeweils an einen gleichen ersten, zweiten oder dritten Anschluss (Port) eines vorstehenden Tripels angeschlossen werden.

Bei einem weiteren besonders vorteilhaften SPE/T1-Ethernet Switch kann eine Vielzahl n2 eine erste T1, zweite T1L und dritte T1S Elektronik und eine erste und zweite Schalteinheit aufweisende Schalteinrichtungen jeweils benachbart zueinander angeordnet sein. Geeigneter Weise können dabei die zweiten Schalteinheiten jeweils mit einer zweiten Schnittstelle eines geeigneten Buchsenteils verbunden sein, so dass mittels der Buchsenteile, der Schalteinrichtungen und mittels einem auf einer Leiterplatte des Ethernet Switches vorgesehenen Kontroller (Controller) schaltbare Anschlüsse (Ports) bereitgestellt sind. Die schaltbaren Anschlüsse (Ports) des Ethernet Switches sind besonders vorteilhaft, nachdem wie vorstehend beschrieben mittels der Schalteinrichtung vorteilhaft an beliebige Anschlüsse (Ports) angeschlossene zweite Einrichtungen (Devices) auch automatisch in eine 100Base T1, 10Base T1L oder 10Base T1S SPE/T1-Ethernet Datenverbindung geschaltet werden können.

Bei den zweiten Einrichtungen (Devices) kann es sich um ein beliebiges SPE/T1-Ethernet aufweisendes Gerät oder eine Einrichtung (Device) handeln, das oder die ein geeignetes Steckteil mit einer zweiten Schnittstelle für eine Steckverbindung mit einem vorstehend beschriebenen schaltbaren Anschluss (Port) aufweisen kann, und das oder die an ein zweiadriges SPE/T1-Ethernet Kabel angeschlossen sein kann.

Wie vorstehend gesagt kann die erste Einrichtung (Device) mit der Leiterplatte, auf der eine vorstehend beschriebene Schalteinrichtung angeordnet ist, vorteilhaft eine SPE/T1- Entwicklungsplatine (Development Board) sein, die geeigneter Weise Arduino(r)-kompatibel ausgebildet sein kann. Die SPE/T1- Entwicklungsplatine (Development Board) kann ihre Leiterplatte, einen Kontroller (Controller), eine Schalteinrichtung und ein Buchsenteil aufweisen, das eine zweite Schnittstelle aufweist und für eine Steckverbindung mit einem an ein zweiadriges einpaariges (Single Pair) Ethernet Kabel angeschlossenes Steckteil vorgesehen ist.

Mittels der mit einer vorstehenden Schalteinrichtung versehenen SPE/T1-Entwicklungsplatine (Development Board) ist bei deren Arduino(r)-kompatibler Ausbildung die erste T1, zweite T1L und dritte T1S Elektronik in die Arduino(r)-Plattform integriert und damit ein einfacher Einstieg in die SPE/T1-Ethernet Technik ermöglicht. Darüber hinaus kann die SPE/T1-Entwicklungsplatine (Development Board) auf diese Weise vorteilhaft über PoDL mit Strom versorgt werden.

Durch die Arduino(r)-Plattform hat ein Anwender einen großen Fundus (Pool) an Bibliotheken (Libraries) und Quellkode, auf den er für die Entwicklung von Applikationen zurückgreifen kann. Außerdem sind viele verschiedene Aufsteckplatinen mit Sensoren und Aktoren verfügbar, die direkt mit der Arduino(r)-kompatiblen SPE/T1- Entwicklungsplatine (Development Board) verwendet werden können. Damit kann die Entwicklung von Prototypen und Demonstratoren mit SPE/T1-Technologie deutlich schneller umgesetzt werden.

### Ausführungsbeispiel

Ausführungsbeispiele der Erfindung sind in den Zeichnungen dargestellt und werden im Folgenden näher erläutert. Es zeigen:
- Fig. 1A: eine erste, zweite und dritte Elektronik einer Schalteinrichtung nach einer Ausführung der Erfindung;
- Fig. 1B: eine Schalteinrichtung nach einer Ausführung der Erfindung;
- Fig. 2: eine weitere Schalteinrichtung nach einer Ausführung der Erfindung;
- Fig. 3: eine weitere Schalteinrichtung nach einer Ausführung der Erfindung;
- Fig. 4A: eine weitere Schalteinrichtung nach einer Ausführung der Erfindung;
- Fig. 4B: die Schalteinrichtung von Fig. 4A auf einer Leiterplatte;
- Fig. 5A und B: jeweils eine weitere Schalteinrichtung nach einer Ausführung der Erfindung;
- Fig. 6: eine weitere Schalteinrichtung nach einer Ausführung der Erfindung;
- Fig. 7A und B: jeweils einen Ethernet Switch nach einer Ausführung der Erfindung; und
- Fig. 8: eine SPE/T1- Entwicklungsplatine (Development Board) nach einer Ausführung der Erfindung.

Die Figuren enthalten teilweise vereinfachte, schematische Darstellungen. Zum Teil werden für gleiche, aber gegebenenfalls nicht identische Elemente identische Bezugszeichen verwendet, die nicht in allen Figuren dargestellt sein können. Verschiedene Ansichten gleicher Elemente könnten unterschiedlich skaliert sein.

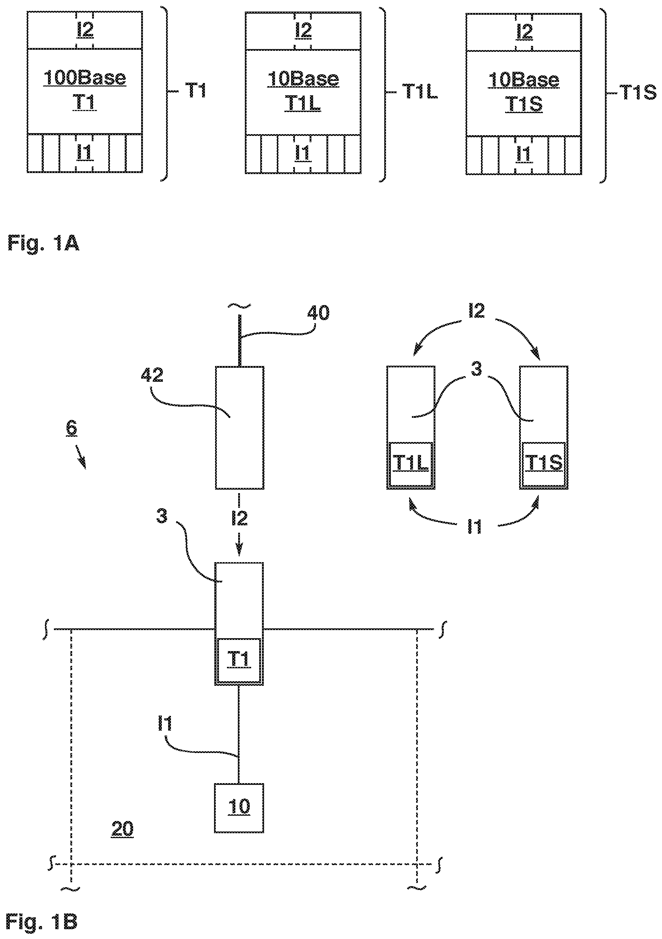

Fig. 1A zeigt eine erste T1, zweite T1L und dritte T1S Elektronik einer Schalteinrichtung nach einer Ausführung der Erfindung. Die erste Elektronik T1 weist eine Schalteinrichtung mit einer 100Base T1 Elektronik und einer ersten I1 und zweiten I2 Schnittstelle auf. Bei der 100Base T1 Elektronik handelt es sich um einen 100Base T1 Ethernet PHY-IC mit weiteren passiven Bauelementen. Die erste Elektronik T1 ist geeigneter Weise derart ausgebildet und eingerichtet, dass eine Datenübertragung von der ersten Schnittstelle I1 zu der zweiten Schnittstelle I2 und von der zweiten Schnittstelle I2 zu der ersten Schnittstelle I1 geschaltet werden kann.

Mittels der vorstehenden ersten Elektronik T1 wird bei einer maximalen Reichweite von 15 m (abgeschirmt 40 m) eine Datenübertragung mit einer Geschwindigkeit von 100 MBit/s bis 1 GBit/s über einpaarige Kupferkabel mit verdrillten Adernpaaren (Twisted-Pair) ermöglicht. Bei der ersten Schnittstelle I1 handelt es sich um eine vielpolige Ethernet Schnittstelle und insbesondere um eine MII oder RMII Schnittstelle, und bei der zweiten Schnittstelle I2 handelt es sich um eine zweipolige SPE/T1-Ethernet Schnittstelle I2.

Die zweite Elektronik T1L weist eine Schalteinrichtung mit einer 10Base T1L Elektronik und einer ersten I1 und zweiten I2 Schnittstelle auf. Bei der 10Base T1L Elektronik handelt es sich um einen 10Base T1L Ethernet PHY-IC mit weiteren passiven Bauelementen. Die zweite Elektronik T1L ist wie die vorstehende erste Elektronik T1 geeigneter Weise derart ausgebildet und eingerichtet, dass eine Datenübertragung von der ersten Schnittstelle I1 zu der zweiten Schnittstelle I2 und von der zweiten Schnittstelle I2 zu der ersten Schnittstelle I1 geschaltet werden kann.

Mittels der vorstehenden zweiten Elektronik T1L wird bei einer maximalen Reichweite von 1000 m bis abgeschirmt 1700 m eine Datenübertragung mit einer Geschwindigkeit von 10 MBit/s über einpaarige Kupferkabel mit verdrillten Adernpaaren (Twisted-Pair) ermöglicht. Bei der ersten Schnittstelle I1 handelt es sich wie bei der ersten Elektronik T1 um eine vielpolige Ethernet Schnittstelle und insbesondere um eine MII oder RMII Schnittstelle, und bei der zweiten Schnittstelle I2 handelt es sich um eine zweipolige SPE/T1-Ethernet Schnittstelle I2.

Die dritte Elektronik T1S weist eine Schalteinrichtung mit einer 10Base T1S Elektronik und einer ersten I1 und zweiten I2 Schnittstelle auf. Bei der 10Base T1S Elektronik handelt es sich um einen 10Base T1S Ethernet PHY-IC mit weiteren passiven Bauelementen, wobei die dritte Elektronik T1S wie die vorstehende erste T1 und zweite T1L Elektronik geeigneter Weise derart ausgebildet und eingerichtet ist, dass eine Datenübertragung von der ersten Schnittstelle I1 zu der zweiten Schnittstelle I2 und von der zweiten Schnittstelle I2 zu der ersten Schnittstelle I1 geschaltet werden kann.

Mittels der vorstehenden dritten Elektronik T1S wird bei einer maximalen Reichweite von 15 m im Mehrpunktverbindungsbetrieb (Multi-Drop) mit bis zu acht Teilnehmern eine Datenübertragung mit einer Geschwindigkeit von 10 MBit/s über einpaarige Kupferkabel mit verdrillten Adernpaaren (Twisted-Pair) ermöglicht. Bei der ersten Schnittstelle I1 handelt es sich wie bei der ersten T1 und zweiten T1L Elektronik um eine vielpolige Ethernet Schnittstelle und insbesondere um eine MII oder RMII Schnittstelle, und bei der zweiten Schnittstelle I2 handelt es sich um eine zweipolige SPE/T1-Ethernet Schnittstelle I2.

Mittels der vorstehenden ersten T1, zweiten T1L und dritten T1S Elektronik wird jeweils eine Datenübertragung zwischen der ersten I1 und zweiten I2 Schnittstelle geschaltet, wonach mittels der ersten T1, zweiten T1L und dritten T1S Elektronik jeweils eine Schalteinrichtung nach einer Ausführung der Erfindung bereitgestellt ist. Die erste T1, zweite T1L und dritte T1S Elektronik ist dabei mit ihrer ersten I1 und zweiten I2 Schnittstelle vorteilhaft derart ausgebildet, dass über die erste I1 und zweite I2 Schnittstelle neben einer Schnittstelle zur Datenübertragung jeweils außerdem eine Energieversorgung über Ethernet (Power over Ethernet, PoE) Schnittstelle bzw. Energieversorgung über Datenleitung (Power over Dataline, PoD) Schnittstelle bereitgestellt ist.

Fig. 1B zeigt eine schematische Darstellung einer Schalteinrichtung nach einer Ausführung der Erfindung. Die Schalteinrichtung ist mittels einem Buchsenteil 3 eines Steckverbinders bereitgestellt, das eine vorstehend unter Bezugnahme auf Fig. 1A beschriebene erste T1 oder zweite T1L oder dritte T1S Elektronik jeweils zusammen mit der ebenfalls vorstehend beschriebenen ersten I1 und zweiten I2 Schnittstelle aufweist.

Ein erstes vorstehendes Buchsenteil 3 weist eine erste Elektronik T1 auf und ist mit seiner ersten Schnittstelle I1 auf einer Leiterplatte 20 einer Einrichtung (Device) 6 angeordnet und auf diese Weise mit einer ersten Schnittstelle I1 einer auf der Leiterplatte 20 angeordneten Elektronik 10 verbunden. Das Buchsenteil 3 ist mit der zweiten Schnittstelle I2 der ersten Elektronik T1 für eine Steckverbindung mit einem Steckteil 42 geeignet, das an ein zweiadriges einpaariges (Single Pair) Ethernet Kabel 40 angeschlossen ist.

Es ist klar, dass das auf der Leiterplatte 20 angeordnete Buchsenteil 3 an Stelle der ersten Elektronik T1 auch eine zweite T1L oder dritte T1S Elektronik aufweisen kann. In der Zeichnung sind hierzu ein entsprechendes, eine zweite Elektronik T1L aufweisendes Buchsenteil 3 und ein eine dritte Elektronik T1S aufweisendes Buchsenteil 3 neben der Leiterplatte 20 dargestellt.

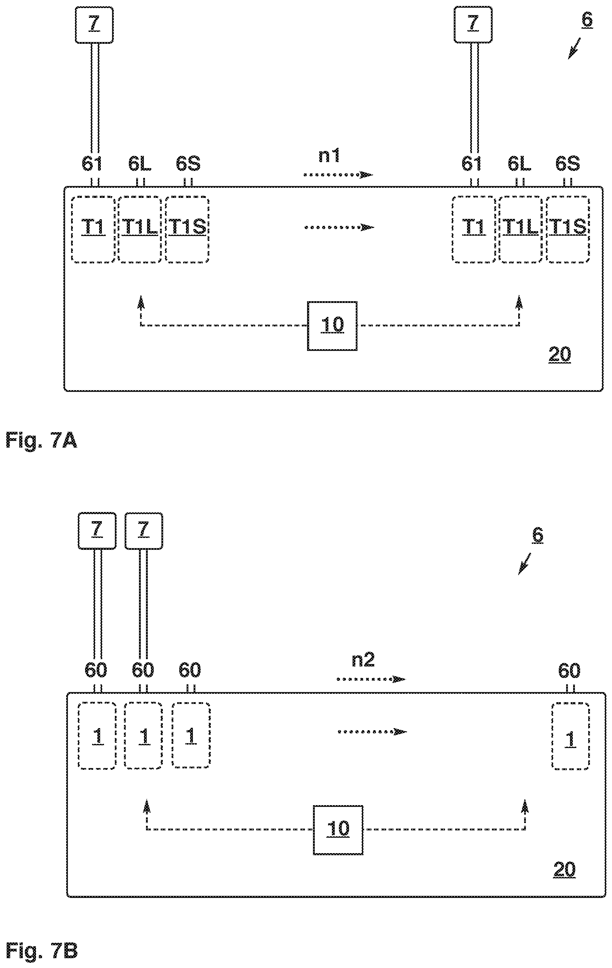

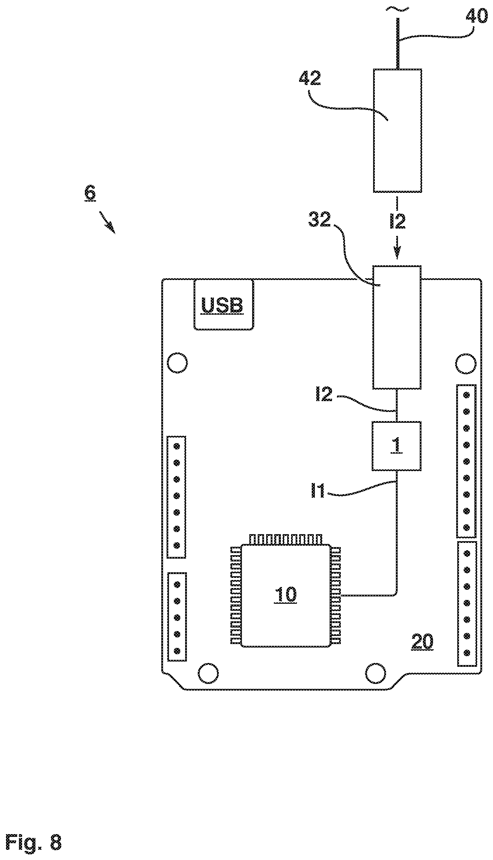

Bei der Einrichtung (Device) 6 kann es sich um eine beliebige Einrichtung (Device) 6 und insbesondere um einen nachfolgend unter Bezugnahme auf Fig. 7A beschriebenen SPE/T1-Ethernet Switch 6 oder eine nachfolgend unter Bezugnahme auf Fig. 8 beschriebene SPE/T1-Entwicklungsplatine (Development Board) 6 handeln.

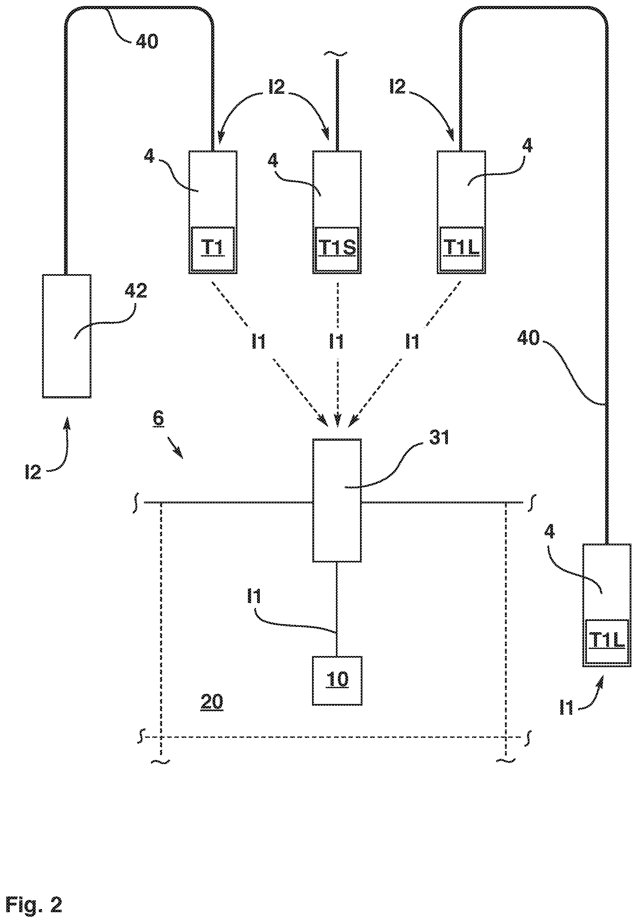

Fig. 2 zeigt eine schematische Darstellung einer weiteren Schalteinrichtung nach einer Ausführung der Erfindung. Die Schalteinrichtung ist mittels einem Steckteil 4 eines Steckverbinders bereitgestellt, das eine vorstehend unter Bezugnahme auf Fig. 1A beschriebene erste T1 oder zweite T1L oder dritte T1S Elektronik jeweils zusammen mit der ebenfalls vorstehend beschriebenen ersten I1 und zweiten I2 Schnittstelle aufweisen kann.

Das Steckteil 4 ist mit seiner ersten Schnittstelle I1 insbesondere für eine Steckverbindung mit einem ebenfalls eine erste Schnittstelle I1 aufweisenden Buchsenteil 31 einer Leiterplatte 20 einer Einrichtung (Devices) 6 vorgesehen, und mit seiner zweiten Schnittstelle I2 an ein Ende eines zweiadrigen einpaarigen (Single Pair) Ethernet Kabels 40 angeschlossen. An einem anderen Ende des Kabels 40 kann ein ebenfalls eine zweite Schnittstelle I2 aufweisendes Steckteil 42 vorgesehen sein. Beispielhaft ist in der Zeichnung hierzu das Steckteil 4 mit der ersten Elektronik T1 über das Kabel 40 mit dem Steckteil 42 verbunden.

An dem anderen Ende des Kabels 40 kann auch ein weiteres, eine erste I1 und zweite I2 Schnittstelle aufweisendes Steckteil 4 angeschlossen sein. Beispielhaft ist in der Zeichnung hierzu das Steckteil 4 mit der zweiten Elektronik T1L über das Kabel 40 mit dem ebenfalls die zweite Elektronik T1L und eine erste I1 und zweite I2 Schnittstelle aufweisenden Steckteil 4 verbunden. Natürlich ist auch das die zweite Elektronik T1L aufweisende Steckteil 4 mit seiner ersten Schnittstelle I1 zur Verbindung mit dem ebenfalls eine erste Schnittstelle I1 aufweisenden Buchsenteil 31 geeignet, das mit seiner ersten Schnittstelle I1 mit einer Elektronik 10 der Leiterplatte 20 verbunden ist.

Das weitere, eine dritte Elektronik T1S aufweisende Steckteil 4 ist mit seiner ersten Schnittstelle I1 ebenfalls für eine Verbindung mit dem Buchsenteil 31 geeignet, wobei an dem anderen in der Zeichnung nicht dargestellten Ende seines zweiadrigen einpaarigen (Single Pair) Ethernet Kabels 40 ein Steckteil 42 oder ein weiteres, eine dritte Elektronik T1S aufweisendes Steckteil 4 angeschlossen sein kann.

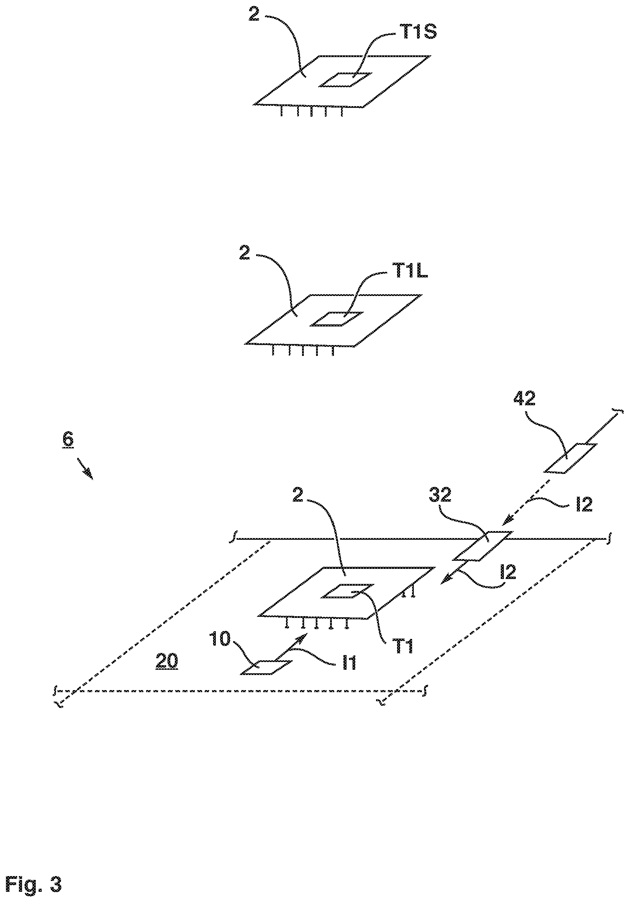

Fig. 3 zeigt eine schematische Darstellung einer Schalteinrichtung nach einer Ausführung der Erfindung. Die Schalteinrichtung ist mittels einer Leiterplatte 2 bereitgestellt, auf der die erste T1 oder zweite T1L oder dritte T1S Elektronik angeordnet sein kann.

Die Leiterplatte 2 ist dabei geeigneter Weise derart ausgebildet, dass sie auf einen Steckplatz einer Leiterplatte 20 einer Einrichtung (Device) 6 steckbar ist, so dass die erste Schnittstelle I1 mit einer ersten Schnittstelle I1 einer Elektronik 10 der Leiterplatte 20 verbunden ist, und die zweite Schnittstelle I2 mit einer zweiten Schnittstelle I2 eines auf der Leiterplatte 20 angeordneten Buchsenteils 32 eines Steckverbinders verbunden ist. Das Buchsenteil 32 ist dabei mit seiner zweiten Schnittstelle I2 für eine Steckverbindung mit einem Steckteil 42 des Steckverbinders vorgesehen, das an ein zweiadriges einpaariges (Single Pair) Ethernet Kabel 40 angeschlossen ist.

In der Zeichnung ist beispielhaft die die erste Elektronik T1 aufweisende Leiterplatte 2 bestimmungsgemäß auf den für sie vorgesehenen Steckplatz der Leiterplatte 20 gesteckt. Es ist klar, dass mittels geeigneter Auswahl der auf die Leiterplatte 20 gesteckten Leiterplatte 2 das Buchsenteil 32 als 100Base T1, 10Base T1L oder 10Base T1S Schnittstelle I2 eingerichtet werden kann.

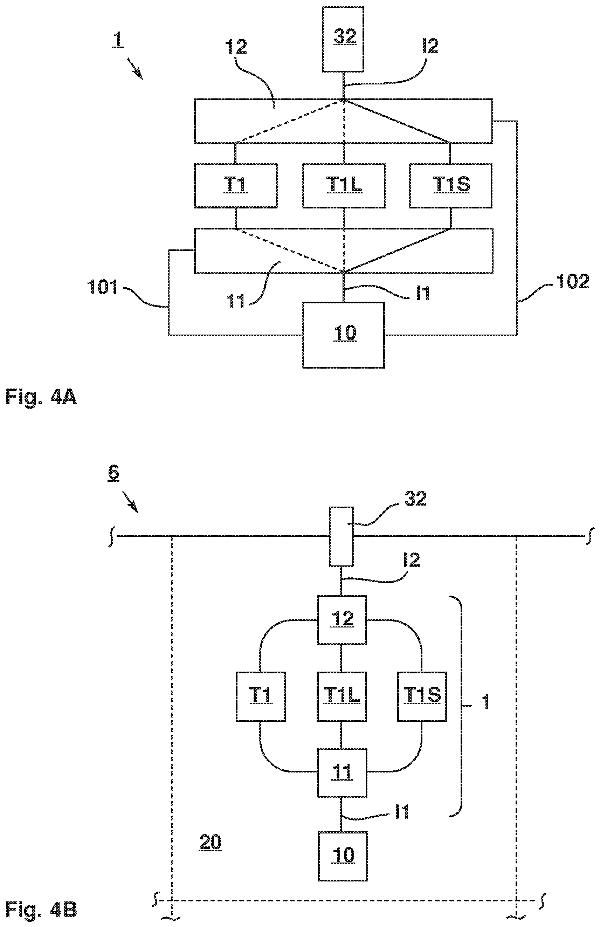

Fig. 4A zeigt eine schematische Darstellung einer Schalteinrichtung 1 nach einer Ausführung der Erfindung und Fig. 4B zeigt die Schalteinrichtung 1 von Fig. 4A auf einer Leiterplatte 20 einer Einrichtung (Device) 6.

Die Schalteinrichtung 1 weist vorteilhaft eine erste T1, zweite T1L und dritte T1S Elektronik, eine erste I1 und zweite I2 Schnittstelle und eine erste 11 und zweite 12 Schalteinheit auf. Die erste 11 und zweite 12 Schalteinheit ist dabei geeigneter Weise derart ausgebildet und eingerichtet, dass mittels der ersten 11 und zweiten 12 Schalteinheit jeweils eine Verbindung der ersten T1 oder zweiten T1L oder dritten T1S Elektronik mit einer ersten I1 bzw. zweiten I2 Schnittstelle einer Elektronik einer Leiterplatte 20 einer Einrichtung (Device) 6 geschaltet werden kann.

Auf der Leiterplatte 20 ist für die vorstehende Schaltung eine Steuereinheit 10 zur Steuerung der ersten 11 und zweiten 12 Schalteinheit vorgesehen, wobei die Steuereinheit 10 hierfür über eine erste 101 und zweite 102 Steuerleitung jeweils mit der ersten 11 und zweiten 12 Schalteinheit verbunden ist. Bei der Steuereinheit 10 kann es sich geeigneter Weise um einen Kontroller (Controller) 10 handeln.

Mittels der vorstehenden von dem Kontroller (Controller) 10 gesteuerten Schalteinrichtung 1 kann vorteilhaft ein mit der zweiten Schalteinheit 12 verbundenes und auf einer Leiterplatte 20 einer Einrichtung (Device) 6 angeordnetes Buchsenteil 32, das eine zweite Schnittstelle I2 für eine Steckverbindung mit einem an ein zweiadriges einpaariges (Single Pair) Ethernet Kabel 40 angeschlossenes Steckteil 42 aufweist, als 100Base T1, 10Base T1L oder10Base T1S Schnittstelle I2 betrieben werden.

Nach der Ausführung von Fig. 4B kann dabei die Schalteinrichtung 1 zusammen mit dem Kontroller (Controller) 10 und dem Buchsenteil 32 mit ihrer ersten 11 und zweiten 12 Schalteinheit und ihrer ersten T1, zweiten T1L und dritten T1S Elektronik auf der Leiterplatte 20 angeordnet sein. Bei der ersten 11 und zweiten 12 Schalteinheit kann es sich geeigneter Weise jeweils um eine analoge Schalteinheit handeln. Zu der ersten T1, zweiten T1L und dritten T1S Elektronik und deren erste I1 und zweite I2 Schnittstellen wird hier auf deren vorstehende Beschreibung unter Bezugnahme auf Fig. 1A verwiesen. Die Leiterplatte 20 ist geeigneter Weise mit den entsprechenden vorstehend genannten Bauelementen der Schalteinrichtung 1 der Ausführung von Fig. 1A und Fig. 4A und B bestückt.

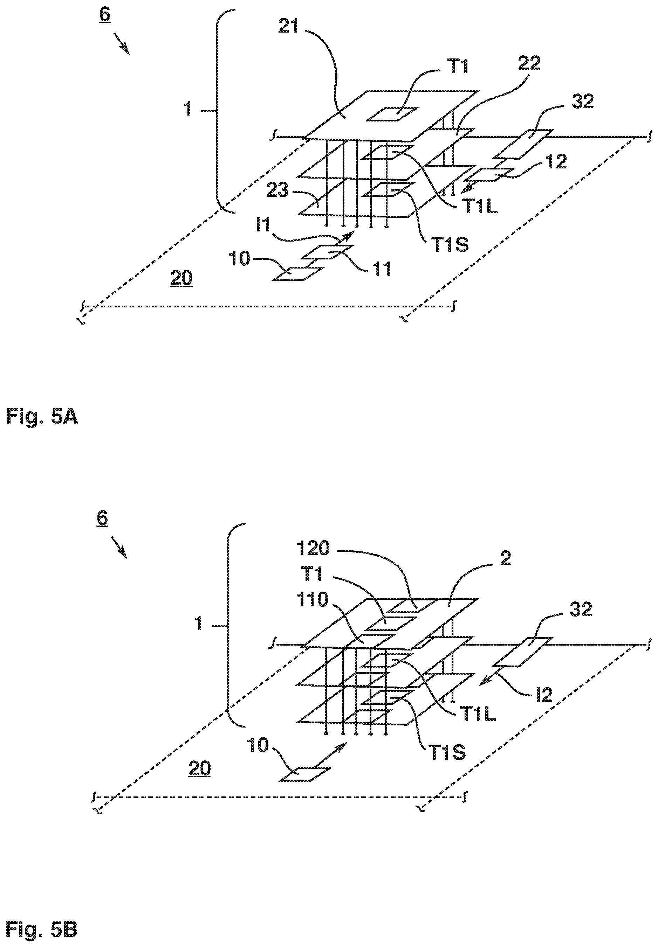

Fig. 5A zeigt eine schematische Darstellung einer Schalteinrichtung 1 nach einer Ausführung der Erfindung und Fig. 5B eine Abwandlung der Schalteinrichtung 1 von Fig. 5A.

Die erste T1, zweite T1L und dritte T1S Elektronik der Schalteinrichtung 1 von Fig. 5A und B ist jeweils auf einer ersten 21, zweiten 22 und dritten 23 Leiterplatte vorgesehen, die in einem Leiterplatten-Stapel (Stack) auf einem vorbestimmten Steckplatz der Leiterplatte 20 angeordnet sind.

Bei der Ausführung der Schalteinrichtung 1 von Fig. 5A ist die erste 11 und zweite 12 Schalteinheit der Schalteinrichtung 1 geeigneter Weise jeweils zusammen mit dem Kontroller (Controller) 10 und dem Buchsenteil 32 auf der Leiterplatte 20 angeordnet.

Anders als bei der Ausführung der Schalteinrichtung 1 von Fig. 5A ist bei der Ausführung der Schalteinrichtung 1 von Fig. 5B die erste 11 und zweite 12 Schalteinheit jeweils mittels eines ersten 110 und zweiten 120 Schaltelements bereitgestellt, die zusammen mit der ersten T1, zweiten T1L und dritten T1S Elektronik jeweils auf der ersten 21, zweiten 22 und dritten 23 Leiterplatte angeordnet sind.

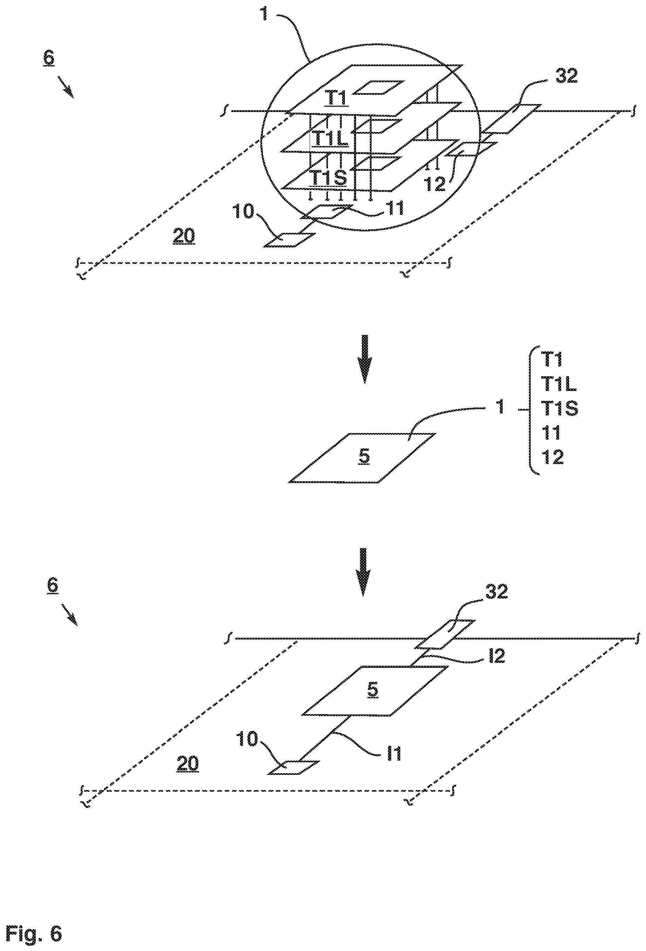

Fig. 6 zeigt eine schematische Darstellung einer Schalteinrichtung 1 nach einer weiteren Ausführung der Erfindung, bei der die Schalteinrichtung 1 mit der ersten T1, zweiten T1L und dritten T1S Elektronik und der ersten 11 und zweiten 12 Schalteinheit als Chip 5 ausgebildet ist. Die Leiterplatte 20 einer Einrichtung (Device) 6 ist geeigneter Weise mit dem Kontroller (Controller) 10, der ersten I1 und zweiten I2 Schnittstelle, dem Buchsenteil 32 und mit dem Chip 5 bestückt.

Bei der Einrichtung (Device) 6 von Fig. 2, 3, 4B, 5A, 5B und 6 kann es sich wie bei der Einrichtung (Device) 6 von Fig. 1B ebenfalls um eine beliebige Einrichtung (Device) 6 und insbesondere um einen nachfolgend unter Bezugnahme auf Fig. 7A und B beschriebenen Ethernet Switch 6 oder eine nachfolgend unter Bezugnahme auf Fig. 8 beschriebene SPE/T1-Entwicklungsplatine (Development Board) 6 handeln.

Fig. 7A und B zeigt hierzu jeweils eine schematische Darstellung eines Ethernet Switches 6 nach einer Ausführung der Erfindung.

Bei dem SPE/T1-Ethernet Switch 6 der Ausführung von Fig. 7A ist eine erste T1, zweite T1L und dritte T1S Elektronik der Schalteinrichtung von Fig. 1B oder Fig. 3 jeweils benachbart zueinander in einem Tripel angeordnet, das entsprechend die Anschlüsse (Ports) 61, 6L und 6S aufweist. Die Anschlüsse (Ports) 61, 6L und 6S können jeweils mittels einem entsprechenden Buchsenteil 3 oder 32 bereitgestellt sein. Die Anschlüsse (Ports) 61, 6L und 6S der Ausführung von Fig. 7A sind jeweils nur zur Bereitstellung einer Datenverbindung von Einrichtungen (Devices) 7 geeignet, die an einen gleichen Anschluss (Port) 61, 6L oder 6S eines der vorstehenden Tripel angeschlossen sind. Der Switch 6 von Fig. 7A ist für eine beispielhafte Vielzahl von n1 Tripel mit einer entsprechenden Anzahl von n1 Anschlüssen (Ports) 61, 6L und 6S ausgelegt.

Bei dem SPE/T1-Ethernet Switch 6 der Ausführung von Fig. 7B sind eine Vielzahl n2 eine erste T1, zweite T1L und dritte T1S Elektronik aufweisende Schalteinrichtungen 1 von Fig. 4B, Fig. 5A, Fig. 5B oder Fig. 6 jeweils benachbart zueinander angeordnet, und weisen entsprechend die mittels dem Kontroller (Controller) 10 und der Schalteinrichtung 1 schaltbaren Anschlüssen (Ports) 60 auf. Die Anschlüsse (Ports) 60 sind dabei jeweils mittels einem entsprechenden Buchsenteil 32 bereitgestellt. Anders als die Anschlüsse (Ports) 61, 6L und 6S der Ausführung von Fig. 7A können bei der Ausführung von Fig. 7B mittels der Schalteinrichtung 1 vorteilhaft an beliebige Anschlüsse (Ports) 60 angeschlossene Einrichtungen (Devices) 7 in eine 100Base T1, 10Base T1L oder 10Base T1S SPE/T1-Ethernet Datenverbindung gebracht werden.

Der Ethernet Switch 6 der Ausführung von Fig. 7A und B ist jeweils außerdem derart eingerichtet, dass die Anschlüsse (Ports) 61, 6L und 6S bzw. die Anschlüsse (Ports) 60 von dem Kontroller (Controller) 10 geeignet geschaltet und verwaltet werden können. Bei den Einrichtungen (Devices) 7 von Fig. 7A und B kann es sich um ein beliebiges SPE/T1-Ethernet aufweisendes Gerät oder eine Einrichtung (Device) 7 handeln, das oder die ein geeignetes Steckteil 42 für eine Steckverbindung mit einem Anschluss (Port) 61, 6L und 6S bzw. mit einem Anschluss (Port) 60 aufweisen kann, und das oder die an ein zweiadriges SPE/T1-Ethernet Kabel 40 angeschlossen sein kann.

Fig. 8 zeigt eine schematische Darstellung einer SPE/T1-Entwicklungsplatine (Development Boards) 6 nach einer Ausführung der Erfindung, mit der Leiterplatte 20, dem Kontroller (Controller) 10, der Schalteinrichtung 1 und dem Buchsenteil 32, das für eine Steckverbindung mit einem an ein zweiadriges einpaariges (Single Pair) Ethernet Kabel 40 angeschlossenes Steckteil 42 vorgesehen ist. Bei der Entwicklungsplatine (Development Board) 6 kann es sich insbesondere um eine Arduino(r)-kompatible Entwicklungsplatine (Development Board) 6 handeln, mittels der die erste T1, zweite T1L und dritte T1S Elektronik in die Arduino(r)-Plattform integriert und damit ein einfacher Einstieg in die SPE/T1-Ethernet Technik ermöglicht ist. Darüber hinaus kann die Arduino(r)-kompatible Entwicklungsplatine (Development Board) 6 wie vorstehend unter Bezugnahme auf Fig. 1A beschrieben über PoDL mit Strom versorgt werden.

Mittels einer insbesondere als Arduino(r)-kompatible Entwicklungsplatine (Development Board) 6 ausgebildeten SPE/T1- Entwicklungsplatine (Development Board) 6 hat ein Anwender einen großen Fundus (Pool) an Bibliotheken (Libraries) und Quellkode, auf den er für die Entwicklung einer Applikation zurückgreifen kann. Außerdem sind viele verschiedene Aufsteckplatinen mit Sensoren und Aktoren verfügbar, die direkt mit der Arduino(r)-kompatiblen SPE/T1- Entwicklungsplatine (Development Board) 6 verwendet werden können. Damit kann die Entwicklung von Prototypen und Demonstratoren mit SPE/T1-Technologie deutlich schneller umgesetzt werden.

Die SPE/T1- Entwicklungsplatine (Development Board) 6 ist insbesondere als Entwicklungsplatine (Development Board) 6 für die Erstellung von Prototypen und Demonstratoren geeignet, bei denen ein SPE/T1-Ethernet Anschluss benötigt wird. Die SPE/T1- Entwicklungsplatine (Development Board) 6 ist dabei insbesondere für Entwickler zur Erstellung von SPE/T1-Ethernet Applikationen geeignet.

Insbesondere die vorstehende Schalteinrichtung 1 einer Einrichtung (Device) 6 kann vorteilhaft hard- und softwaregestützt automatisch geschaltet werden, wobei eine Steckverbindung eines Steckteils 42 mit einem Buchsenteil 32 erkannt und mittels Schaltung der ersten 11 und zweiten 12 Schalteinheit auf Betrieb der ersten T1 und zweiten T1L und dritten T1S Elektronik und auf Erkennung von Datenverbindungen (Data Links) geprüft werden kann. Bei Detektion von entsprechenden Datenverbindungen (Data Links) kann der Betrieb der Elektronik T1, T1L oder T1S, bei der Datenverbindungen (Data Links) detektiert werden, als für den weiteren Betrieb geeignet geschaltet werden.

Es ist klar, dass die Schalteinrichtung 1 außerdem einen geeigneten manuellen Schalter oder Taster und/oder eine hard- und softwaregestützte Benutzer Schnittstelle (User Interface) zur manuellen Schaltung der Schalteinrichtung 1 aufweisen kann, die insbesondere eine Webschnittstelle (Web-Interface) sein kann.

Auch wenn in den Figuren verschiedene Aspekte oder Merkmale der Erfindung jeweils in Kombination gezeigt sind, ist für den Fachmann - soweit nicht anders angegeben - ersichtlich, dass die dargestellten und diskutierten Kombinationen nicht die einzig möglichen sind. Insbesondere können einander entsprechende Einheiten oder Merkmalskomplexe aus unterschiedlichen Ausführungsbeispielen miteinander ausgetauscht werden.

### Bezugszeichenliste

- 1: Schalteinrichtung

- 10: Elektronik, Steuereinheit, Kontroller (Controller)
- 101, 102: erste, zweite Steuerleitung

- 11, 12: erste, zweite Schalteinheit
- 110, 120: erstes, zweites Schaltelement

- 2, 20: Leiterplatte
- 21, 22, 23: erste, zweite, dritte Leiterplatte

- 3, 31, 32: Steckverbinder, Buchsenteil

- 4, 42: Steckverbinder, Steckteil
- 40: Kabel

- 5: Chip

- 6: Einrichtung (Device), Ethernet Switch, Entwicklungsplatine (Development Board)
- 60, 61, 6L, 6S: Anschluss (Port)

- 7: Gerät, Einrichtung (Device)

- I1, I2: erste, zweite Schnittstelle
- n1, n2: Anzahl
- T1, T1L, T1S: erste, zweite, dritte Elektronik

## Patentansprüche

1. Schalteinrichtung zur Bereitstellung einer einpaarigen Ethernet (SPE/T1-Ethernet) Verbindung, mit
einer ersten (I1) und zweiten (I2) Schnittstelle, wobei die erste Schnittstelle (I1) eine vielpolige und insbesondere eine MII- oder RMII Schnittstelle ist, und die zweite Schnittstelle (I2) eine zweipolige SPE/T1-spezifische Schnittstelle ist, und wobei die Schalteinrichtung außerdem
eine erste (T1) für einen 100Base-T1 Betrieb und/oder eine zweite (T1L) für einen 10Base-T1L Betrieb und/oder eine dritte (T1S) für einen 10Base-T1 S Betrieb der zweiten Schnittstelle (I2) geeignete Elektronik aufweist, die jeweils derart ausgebildet und eingerichtet ist, dass eine Datenübertragung von der ersten Schnittstelle (I1) zu der zweiten Schnittstelle (I2) und von der zweiten Schnittstelle (I2) zu der ersten Schnittstelle (I1) und ein ausgewählter SPE/T1-spezifischer Betrieb der zweiten Schnittstelle (I2) geschaltet werden kann.

2. Schalteinrichtung nach Anspruch 1, wobei
die Schalteinrichtung
wenigstens eine Leiterplatte (2) mit der ersten (T1) oder zweiten (T1L) oder dritten (T1S) Elektronik aufweist, wobei die Leiterplatte (2) derart auf einen Steckplatz einer Leiterplatte (20) einer Einrichtung (6) steckbar ist, dass
die erste Schnittstelle (I1) mit einer Elektronik (10) der Leiterplatte (20) verbunden ist, und
die zweite Schnittstelle (I2) mit einem Buchsenteil (32) eines Steckverbinders verbunden ist, das für eine Steckverbindung mit einem Steckteil (42) des Steckverbinders vorgesehen ist, das an ein zweiadriges einpaariges Ethernet Kabels (40) angeschlossen ist.

3. Schalteinrichtung nach Anspruch 1, wobei
die Schalteinrichtung
wenigstens einen Steckverbinder (3, 4) mit der ersten (T1) oder zweiten (T1L) oder dritten (T1S) Elektronik und mit der ersten (I1) und zweiten (I2) Schnittstelle aufweist, wobei
der Steckverbinder (3, 4) ein Buchsenteil (3) ist, das mit seiner ersten Schnittstelle (I1) mit einer Leiterplatte (20) einer Einrichtung (6) verbunden ist, und
mit seiner zweiten Schnittstelle (I2) für eine Steckverbindung mit einem Steckteil (42) vorgesehen ist, das an ein zweiadriges einpaariges Ethernet Kabel (40) angeschlossen ist, oder der Steckverbinder (3, 4) ein Steckteil (4) ist, das mit seiner ersten Schnittstelle (I1) für eine Steckverbindung mit einem Buchsenteil (31) einer Leiterplatte (20) einer Einrichtung (6) vorgesehen ist, und
mit seiner zweiten Schnittstelle (I2) an ein zweiadriges einpaariges Ethernet Kabel (40) angeschlossen ist.

4. Schalteinrichtung nach Anspruch 1, wobei
die Schalteinrichtung eine Schalteinrichtung (1) ist, die die erste (T1), zweite (T1L) und dritte (T1S) Elektronik und eine erste (11) und zweite (12) Schalteinheit aufweist, wobei
die erste (11) und zweite (12) Schalteinheit derart ausgebildet und eingerichtet ist, dass jeweils eine Verbindung der ersten (T1) oder zweiten (T1L) oder dritten (T1S) Elektronik mit einer ersten (I1) und zweiten (I2) Schnittstelle einer Elektronik einer Leiterplatte (20) einer Einrichtung (6) geschaltet werden kann, und wobei auf der Leiterplatte (20) eine Steuereinheit (10) zur Steuerung der ersten (11) und zweiten (12) Schalteinheit vorgesehen ist, die jeweils über eine erste (101) und zweite (102) Steuerleitung mit der ersten (11) und zweiten (12) Schalteinheit verbunden ist.

5. Schalteinrichtung (1) nach Anspruch 4, wobei
die erste (11) und zweite (12) Schalteinheit und
die erste (T1), zweite (T1L) und dritte (T1S) Elektronik auf der Leiterplatte (20) der Einrichtung (6) angeordnet sind.

6. Schalteinrichtung (1) nach Anspruch 4, wobei
die erste (T1), zweite (T1L) und dritte (T1S) Elektronik jeweils auf einer ersten (21), zweiten (22) und dritten (23) Leiterplatte vorgesehen ist, die in einem Leiterplatten-Stapel auf der Leiterplatte (20) angeordnet sind, wobei
die erste (11) und zweite (12) Schalteinheit jeweils auf der Leiterplatte (20) der Einrichtung (6) angeordnet ist, oder
jeweils mittels einem ersten (110) und zweiten (120) Schaltelement bereitgestellt ist, die zusammen mit der ersten (T1), zweiten (T1L) und dritten (T1S) Elektronik jeweils auf der ersten (21), zweiten (22) und dritten (23) Leiterplatte angeordnet sind.

7. Schalteinrichtung (1) nach Anspruch 4, wobei
die erste (11) und zweite (12) Schalteinheit und die erste (T1), zweite (T1L) und dritte (T1S) Elektronik in einem Chip (5) integriert sind.

8. Schalteinrichtung (1) nach einem der vorstehenden Ansprüche 4 bis 7, wobei
die Schalteinrichtung (1) hard- und softwaregestützt automatisch geschaltet wird, und/oder
die Schalteinrichtung (1) eine hard- und/oder softwaregestützte Benutzer Schnittstelle zur manuellen Schaltung der Schalteinrichtung (1) aufweist.

9. Schalteinrichtung nach einem der vorstehenden Ansprüche 1 bis 3 oder mit einer Schalteinrichtung (1) nach einem der Ansprüche 4 bis 8, wobei
mittels der Schalteinrichtung oder der Schalteinrichtung (1) Energieversorgung über Datenleitung (PoDL) bereitgestellt ist.

10. Switch (6) mit einer Schalteinrichtung nach einem Ansprüche 1 bis 3 oder 9, oder mit einer Schalteinrichtung (1) nach einem der Ansprüche 4 bis 9 zur Bereitstellung einer SPE/T1-Ethernet Verbindung wenigstens zweier Einrichtungen (7), wobei der Switch (6) eine Vielzahl (n1) von ersten (61), zweiten (6L) und dritten (6S) Anschlüssen aufweist, oder
eine Vielzahl (n2) von schaltbaren Anschlüssen (60) aufweist, die jeweils mittels einer zweiten Schnittstelle (I2) der Schalteinrichtung (1) bereitgestellt sind.

11. Switch (6) nach Anspruch 10, wobei
der Switch (6) mit den schaltbaren Anschlüssen (60) derart ausgebildet und eingerichtet ist, dass mittels der Schalteinrichtung (1) an beliebige Anschlüssen (60) angeschlossene Einrichtungen (7) auch automatisch in eine 100Base T1, 10Base T1L oder 10Base T1S SPE/T1-Ethernet Datenverbindung geschaltet werden können.

12. SPE/T1- Entwicklungsplatine (6) mit einer Schalteinrichtung nach einem Ansprüche 1 bis 3 oder 9, oder mit einer Schalteinrichtung (1) nach einem der Ansprüche 4 bis 9.

## Claims

1. Switching apparatus for providing a single pair Ethernet (SPE/T1-Ethernet) connection, having
a first (I1) and second (I2) interface, wherein
the first interface (I1) is a multi-pole and in particular an MII or RMII interface, and the second interface (I2) is a two-pole SPE/T1-specific interface, and wherein
the switching apparatus additionally
has first electronics (T1) suitable for 100Base-T1 operation and/or second electronics (T1L) suitable for 10Base-T1L operation and/or third electronics (T1S) suitable for 10Base-T1S operation of the second interface (I2), each of which is designed and configured such that data transmission from the first interface (I1) to the second interface (I2) and from the second interface (I2) to the first interface (I1) and a selected SPE/T1-specific operation mode of the second interface (I2) can be switched.

2. Switching apparatus according to claim 1, wherein
the switching apparatus
has at least one printed circuit board (2) with the first (T1) or second (T1L) or third (T1S) electronics, wherein
the printed circuit board (2) is configured to be plugged into a slot of a printed circuit board (20) of a device (6) such that the first interface (I1) is connected to electronics (10) of the printed circuit board (20), and
the second interface (I2) is connected to a socket part (32) of a plug connector which is provided for a plug connection to a plug part (42) of the plug connector which is connected to a two-core single pair Ethernet cable (40).

3. Switching apparatus according to claim 1, wherein
the switching apparatus
has at least one plug connector (3, 4) with the first (T1) or second (T1L) or third (T1S) electronics and with the first (I1) and second (I2) interface,
wherein
the plug connector (3, 4) is a socket part (3), which is connected by its first interface (I1) to a printed circuit board (20) of a device (6), and
is provided with its second interface (I2) configured for a plug connection to a plug part (42) which is connected to a two-core single pair Ethernet cable (40), or
the plug connector (3, 4) is a plug part (4), which is provided with its first interface (I1) configured for a plug connection to a socket part (31) of a printed circuit board (20) of a device (6), and
is connected by its second interface (I2) to a two-core single pair Ethernet cable (40).

4. Switching apparatus according to claim 1, wherein
the switching apparatus is a switching apparatus (1) that has first (T1), second (T1L) and third (T1S) electronics and a first (11) and second (12) switching unit, wherein
the first (11) and second (12) switching unit is designed and configured such that in each case a connection of the first (T1) or second (T1L) or third (T1S) electronics to a first (I1) and second (I2) interface of electronics of a printed circuit board (20) of a device (6) can be switched, and wherein
a control unit (10) configured for controlling the first (11) and second (12) switching units is provided on the printed circuit board (20) and
is connected to the first (11) and second (12) switching unit via a first (101) and second (102) control line, respectively.

5. Switching apparatus (1) according to claim 4, wherein
the first (11) and second (12) switching units and
the first (T1), second (T1L) and third (T1S) electronics are arranged on the printed circuit board (20) of the device (6).

6. Switching apparatus (1) according to claim 4, wherein
the first (T1), second (T1L) and third (T1S) electronics are each provided on a first (21), second (22) and third (23) printed circuit board arranged in a printed circuit board stack on the printed circuit board (20), wherein
the first (11) and second (12) switching units are each arranged on the printed circuit board (20) of the device (6), or
are provided by means of first (110) and second (120) switching elements, respectively, which are arranged together with the first (T1), second (T1L) and third (T1S) electronics on the first (21), second (22) and third (23) printed circuit board, respectively.

7. Switching apparatus (1) according to claim 4, wherein
the first (11) and second (12) switching units and the first (T1), second (T1L) and third (T1S) electronics are integrated in a chip (5).

8. Switching apparatus (1) according to one of the preceding claims 4 to 7, wherein
the switching apparatus (1) is configured for automatic switching with hardware and software support, and/or the switching apparatus (1) has a hardware- and/or software-supported user interface configured for manual switching of the switching apparatus (1).

9. Switching apparatus according to one of the preceding claims 1 to 3 or comprising a switching apparatus (1) according to one of claims 4 to 8, wherein
energy supply via Power over Data Line (PoDL) is provided by means of the switching apparatus or the switching apparatus (1).

10. Switch (6) having the switching apparatus according to one of claims 1 to 3 or 9, or having the switching apparatus (1) according to one of claims 4 to 9 configured for providing an SPE/T1-Ethernet connection of at least two devices (7), wherein
the switch (6) has a plurality (n1) of first (61), second (6L) and third (6S) terminals, or
has a plurality (n2) of switchable ports (60), each of which is provided by the second interface (I2) of the switching apparatus (1).

11. Switch according to claim 10, wherein
the switch (6) with the switchable ports (60) is designed and configured such that by means of the switching apparatus (1) devices (7) connected to any ports (60) can also be automatically switched into a 100BaseT1, 10Base T1L or 10Base T1S SPE/T1-Ethernet data connection.

12. SPE/T1-development board (6) comprising a switching apparatus according to one of claims 1 to 3 or 9, or a switching apparatus (1) according to one of claims 4 to 9.

## Revendications

1. Dispositif de commutation destiné à fournir une liaison Ethernet à paire unique (SPE/T1-Ethernet), comprenant
une première (I1) et une deuxième (I2) interface, la première interface (I1) étant une interface multipolaire et notamment une interface MII ou RMII, et la deuxième interface (I2) étant une interface bipolaire spécifique SPE/T1, et le dispositif de commutation comprenant en outre
une première électronique (T1) appropriée pour un fonctionnement 100Base-T1 et/ou une deuxième électronique (T1L) appropriée pour un fonctionnement 10Base-T1L et/ou une troisième électronique (T1S) appropriée pour un fonctionnement 10Base-T1S de la deuxième interface (I2), chacune étant conçue et configurée de manière telle qu'une transmission de données de la première interface (I1) vers la deuxième interface (I2) et de la deuxième interface (I2) vers la première interface (I1), ainsi qu'un fonctionnement spécifique SPE/T1 sélectionné de la deuxième interface (I2), peuvent être commutés.

2. Dispositif de commutation selon la revendication 1, dans lequel le dispositif de commutation comprend
au moins une carte de circuit imprimé (2) avec la première électronique (T1) ou la deuxième électronique (T1L) ou la troisième électronique (T1S), la carte de circuit imprimé (2) étant enfichable dans un emplacement d'une carte de circuit imprimé (20) d'un dispositif (6) de manière telle que
la première interface (I1) est reliée à une électronique (10) de la carte de circuit imprimé (20), et
la deuxième interface (I2) est reliée à une partie femelle (32) d'un connecteur qui est prévue pour une connexion enfichable avec une partie mâle (42) du connecteur qui est raccordée à un câble Ethernet à deux conducteurs et à paire unique (40).

3. Dispositif de commutation selon la revendication 1, dans lequel le dispositif de commutation comprend au moins un connecteur (3, 4) avec la première électronique (T1) ou la deuxième électronique (T1L) ou la troisième électronique (T1S) et avec la première (I1) et la deuxième (I2) interface, le connecteur (3, 4) étant une partie femelle (3) qui est reliée, par sa première interface (I1), à une carte de circuit imprimé (20) d'un dispositif (6), et qui est prévue, par sa deuxième interface (I2), pour une connexion enfichable avec une partie mâle (42) qui est raccordée à un câble Ethernet à deux conducteurs et à paire unique (40), ou
une partie mâle (4) qui est prévue, par sa première interface (I1), pour une connexion enfichable avec une partie femelle (31) d'une carte de circuit imprimé (20) d'un dispositif (6), et qui est raccordée, par sa deuxième interface (I2), à un câble Ethernet à deux conducteurs et à paire unique (40).

4. Dispositif de commutation selon la revendication 1, dans lequel le dispositif de commutation est un dispositif de commutation (1) qui comprend la première électronique (T1), la deuxième électronique (T1L) et la troisième électronique (T1S) ainsi qu'une première (11) et une deuxième (12) unité de commutation, dans lequel la première (11) et la deuxième (12) unité de commutation sont conçues et configurées de manière telle qu'une liaison de la première (T1) ou de la deuxième (T1L) ou de la troisième (T1S) électronique avec une première (I1) et une deuxième (I2) interface d'une électronique d'une carte de circuit imprimé (20) d'un dispositif (6) peut être commutée, et dans lequel
une unité de commande (10) destinée à commander la première (11) et la deuxième (12) unité de commutation est prévue sur la carte de circuit imprimé (20), ladite unité de commande étant reliée respectivement à la première (11) et à la deuxième (12) unité de commutation par une première (101) et une deuxième (102) ligne de commande.

5. Dispositif de commutation (1) selon la revendication 4, dans lequel la première (11) et la deuxième (12) unité de commutation et
la première (T1), la deuxième (T1L) et la troisième (T1S) électronique sont disposées sur la carte de circuit imprimé (20) du dispositif (6).

6. Dispositif de commutation (1) selon la revendication 4, dans lequel
la première (T1), la deuxième (T1L) et la troisième (T1S) électronique sont respectivement prévues sur une première (21), une deuxième (22) et une troisième (23) carte de circuit imprimé, qui sont disposées en empilement de cartes de circuit imprimé sur la carte de circuit imprimé (20), dans lequel
la première (11) et la deuxième (12) unité de commutation sont chacune disposées sur la carte de circuit imprimé (20) du dispositif (6), ou
sont respectivement réalisées au moyen d'un premier (110) et d'un deuxième (120) élément de commutation, qui sont disposés conjointement avec la première (T1), la deuxième (T1L) et la troisième (T1S) électronique respectivement sur la première (21), la deuxième (22) et la troisième (23) carte de circuit imprimé.

7. Dispositif de commutation (1) selon la revendication 4, dans lequel la première (11) et la deuxième (12) unité de commutation et la première (T1), la deuxième (T1L) et la troisième (T1S) électronique sont intégrées dans une puce (5).

8. Dispositif de commutation (1) selon l'une quelconque des revendications 4 à 7 précédentes, dans lequel le dispositif de commutation (1) est commuté automatiquement à l'aide de moyens matériels et logiciels, et/ou le dispositif de commutation (1) comprend une interface utilisateur à commande matérielle et/ou logicielle destinée à la commutation manuelle du dispositif de commutation (1).

9. Dispositif de commutation selon l'une quelconque des revendications 1 à 3 ou avec un dispositif de commutation (1) selon l'une quelconque des revendications 4 à 8, dans lequel une alimentation électrique par la ligne de données (PoDL) est fournie au moyen du dispositif de commutation ou du dispositif de commutation (1).

10. Switch (6) avec un dispositif de commutation selon l'une quelconque des revendications 1 à 3 ou 9, ou avec un dispositif de commutation (1) selon l'une quelconque des revendications 4 à 9, destiné à fournir une liaison Ethernet SPE/T1 d'au moins deux dispositifs (7), dans lequel
le Switch (6) comprend une pluralité (n1) de premières (61), deuxièmes (6L) et troisièmes (6S) connexions, ou
une pluralité (n2) de connexions commutables (60), qui sont chacune fournies au moyen d'une deuxième interface (I2) du dispositif de commutation (1).

11. Switch (6) selon la revendication 10, dans lequel le Switch (6) est conçu et configuré avec les connexions commutables (60) de manière telle que, au moyen du dispositif de commutation (1), des dispositifs (7) raccordés à n'importe quelles connexions (60) peuvent également être commutés automatiquement vers une liaison de données Ethernet SPE/T1 100Base-T1, 10Base-T1L ou 10Base-T1S.

12. Carte de développement SPE/T1 (6) avec un dispositif de commutation selon l'une quelconque des revendications 1 à 3 ou 9, ou avec un dispositif de commutation (1) selon l'une quelconque des revendications 4 à 9.
